**Europäisches Patentamt**

**European Patent Office**

**Office européen des brevets**

(19)

(11) Publication number : **0 337 552 B1**

# (12) EUROPEAN PATENT SPECIFICATION

(45) Date of publication of patent specification :
**10.07.91 Bulletin 91/28**

(51) Int. Cl.⁵ : **B62H 5/00**

(21) Application number : **89200871.5**

(22) Date of filing : **07.04.89**

(54) **Luggage-carrier with removable shackle lock.**

(30) Priority : **08.04.88 NL 8800908**

(43) Date of publication of application :
**18.10.89 Bulletin 89/42**

(45) Publication of the grant of the patent :
**10.07.91 Bulletin 91/28**

(84) Designated Contracting States :
**DE FR GB NL**

(56) References cited :
**EP-A- 0 079 798**
**CH-A- 103 129**
**CH-A- 271 546**
**FR-A- 2 434 745**
**FR-A- 2 600 964**

(73) Proprietor : **Doppenberg, Gerrit**
**Potgieterstraat 55**
**NL-3771 GW Barneveld (NL)**

(72) Inventor : **Doppenberg, Gerrit**
**Potgieterstraat 55**
**NL-3771 GW Barneveld (NL)**

(74) Representative : **Smulders, Theodorus A.H.J.,**
**Ir. et al**
**Vereenigde Octrooibureaux Nieuwe Parklaan**
**107**
**NL-2587 BP 's-Gravenhage (NL)**

EP 0 337 552 B1

## Description

This invention relates to a luggage-carrier for a vehicle, in particular a bicycle or tricyle, provided with one or more bow-shaped parts (FR-A-2 454 745).

For protecting vehicles, in particular two-wheeled or three-wheeled vehicles, such as bicycles, scooters, motorcycles, so-called trikes, but also four-wheeled vehicles, such as the so-called quads, and caterpillar vehicles, such as snow scooters, against theft, preferably shackle locks are used which combine a great strength with the possibility of securing the vehicle to a post, a fence or the like. The possibility of securing the vehicle to a fixed object is of crucial importance, since vehicles such as those mentioned, even if these are locked immovably, can be loaded into a motorcar in a simple manner and thus still be stolen. For securing the vehicle to a wide variety of fixed objects, it is necessary, however, to carry along a large shackle lock, which is highly inconvenient, precisely with vehicles as mentioned above. It is known for the purpose of simplifying the carrying along of such locks, to provide holders with which these can be attached to the frame of the vehicle. However, this solution does not remove the problem that the lock forms an additional. part, which has to be carried along on the vehicle and which occupies space, thus increasing the weight of the vehicle. These are major drawbacks with large shackle locks.

It is an object of the invention to remove the above drawbacks, at least partly. To that effect, the invention provides a bow-shaped part of the luggage carrier which is constructed as a detachable shackle lock. In this way, the weight of this bow-shaped part is saved, while, when the vehicle is used, the fitting of the shackle lock in the place of said part likewise eliminates the drawback that this occupies space. A luggage carrier of this type can be provided, for that matter both at the front and at the back of the vehicle, as is known e.g. for bicycles.

The invention is based on the insight that both the luggage carrier of vehicles, as those mentioned, and shackle locks include bow-shaped parts of comparable dimensions, which should both be capable of resisting substantial forces. In a further embodiment of the invention, it is arranged that in a luggage carrier with a carrier bracket, said bracket forms the bow-shaped part constructed as a shackle lock. As the carrier bracket, in general, is located substantially at the top of the luggage carrier, this is easily accessible for detaching and reinstalling it. When such a carrier bracket is used for suspending luggage bags or suitcases therefrom, it is possible to lock these with the carrier bracket to the vehicle, which, it is true, offers a limited but under certain circumstances yet adequate protection against theft of the luggage.

According to an alternative elaboration of the invention, it is arranged that, in a luggage carrier having at least one supporting bracket installed aside, one bracket is formed as a detachable shackle lock. At the side of the vehicle, such as those mentioned, there is mostly space for fitting a supporting bracket enclosing a large area. When this supporting bracket is used as a shackle lock, this has the advantage that this can be fitted about posts, trees and the like having a large diameter.

According to a further embodiment of the invention, wherein the carrier bracket is constructed as a lock, and wherein the luggage carrier is provided with a support structure, at least a part of the support structure can be arranged for attachment to the vehicle for swivelling movement about points of attachment near the end thereof remote from the carrier bracket. Such a swivelling attachment enables the support structure or at any rate a part thereof to be swung down for it to be used as a stand. Naturally, this is only useful for two-wheeled vehicles. The part of the support structure can be swung down laterally for the vehicle to lean thereon laterally. Alternatively, the structure is arranged to swivel about an axis transversely to the vehicle, whereby the vehicle is pulled over the structure, so that one of the wheels comes clear of the ground. There is thus provided a support at two points of the support structure and one point where either of the two wheels rests on the ground. In conjunction with the detachable carrier bracket, this embodiment offers the particular advantage that the support structure can be fixed simultaneously with the positioning of the carrier bracket.

According to a preferred embodiment, the bracket constructed as a shackle lock is further designed in such a manner that it includes a closing member adapted to connect opposite ends of the bracket with one another and to an attaching member mounted on the vehicle. There is thus provided a highly reliable attachment of the respective bracket to the vehicle.

In still a further embodiment of the present invention, it is preferably arranged for the closing member to be a pin, which in the closed position, in which the bracket forming the shackle lock forms part of the luggage carrier, extends through an opening in either of the two ends of the bracket and through an opening in the attaching member and has one end locked in a lock provided at the other end of the bracket constructed as a shackle lock. In this manner, only one active point of engagement of the lock will be sufficient.

Mostly, it will be advantageous for the shackle lock forming part of the luggage carrier to be attached to the other parts of the luggage carrier in other points in addition to the lock. To that end, the luggage carrier is preferably fitted with clamps, which offer the advantage that no additional operations are necessary for attaching the respective bracket thereto.

Some embodiments of the invention will now be described, by way of example, with reference to the accompanying drawings, in which :

Fig. 1 is a perspective view of a luggage carrier with an integrated shackle lock ;

Fig. 2 is a perspective, exploded view of the luggage carrier of Fig. 1 ;

Fig. 3 is a perspective, exploded view of an alternative embodiment of the luggage carrier ;

Fig. 4 is a side view of a rear portion of a bicycle with a support structure of a luggage carrier shown in Fig. 3 ;

Fig. 5 is a top view of another alternative embodiment of the luggage carrier from which a suitcase is suspended ;

Fig. 6 is a front view of the luggage carrier of Fig. 5 ; and

Fig. 7 is a perspective, exploded view of still another embodiment of the luggage carrier.

In the drawings, corresponding parts are indicated by identical reference numerals.

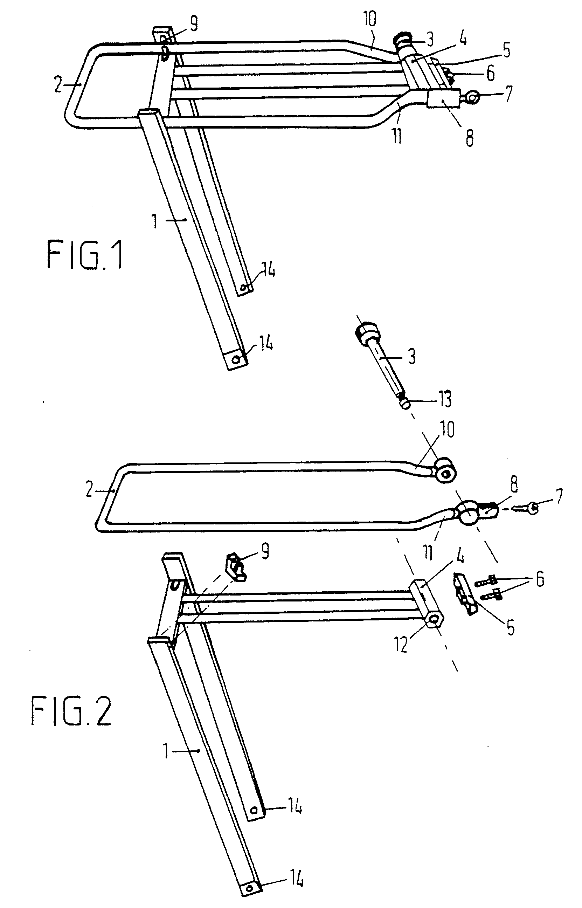

Figs. 1 and 2 show a luggage carrier according to the invention comprising a support structure 1 and a carrier bracket 2 constructed as a shackle lock. A pin 3 connects the two ends 10 and 11 of the carrier bracket 2 and extends through an opening 12 into an attaching member 4. Attaching member 4 can be clamped onto a vehicle through a clamp including a strip 5 and bolts 6. However, it can also be arranged for member 4 to be welded the vehicle or to be attached to it otherwise. At the second end 11 of carrier bracket 2, there is provided a lock 8, which can be operated through a key 7. The lock engages with an end 13 of pin 3. Shown at 14 are points of attachment of support structure 1. Carrier bracket 2 can furthermore be secured in clamps 9.

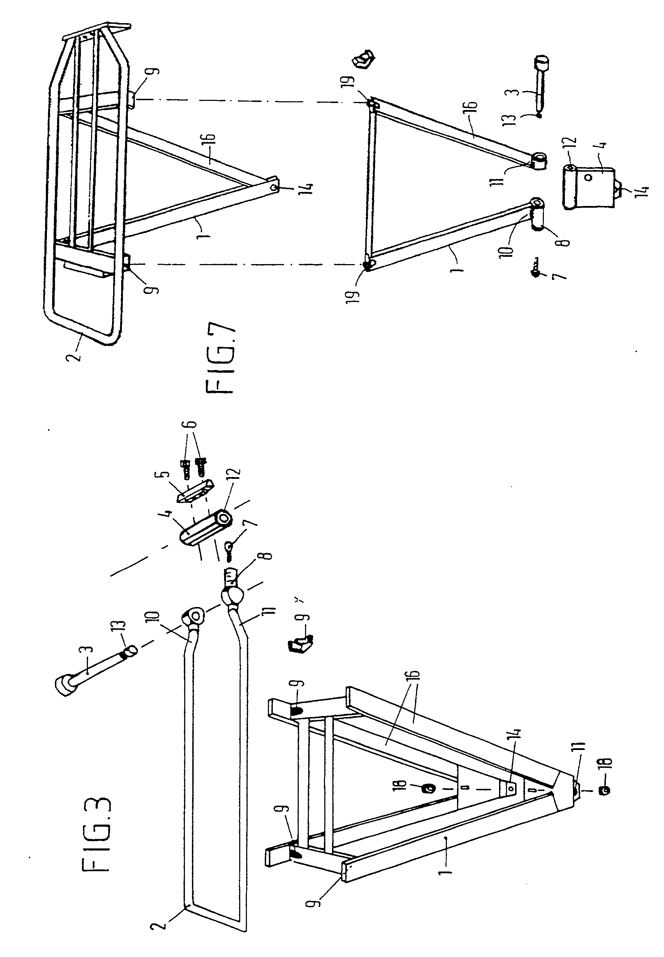

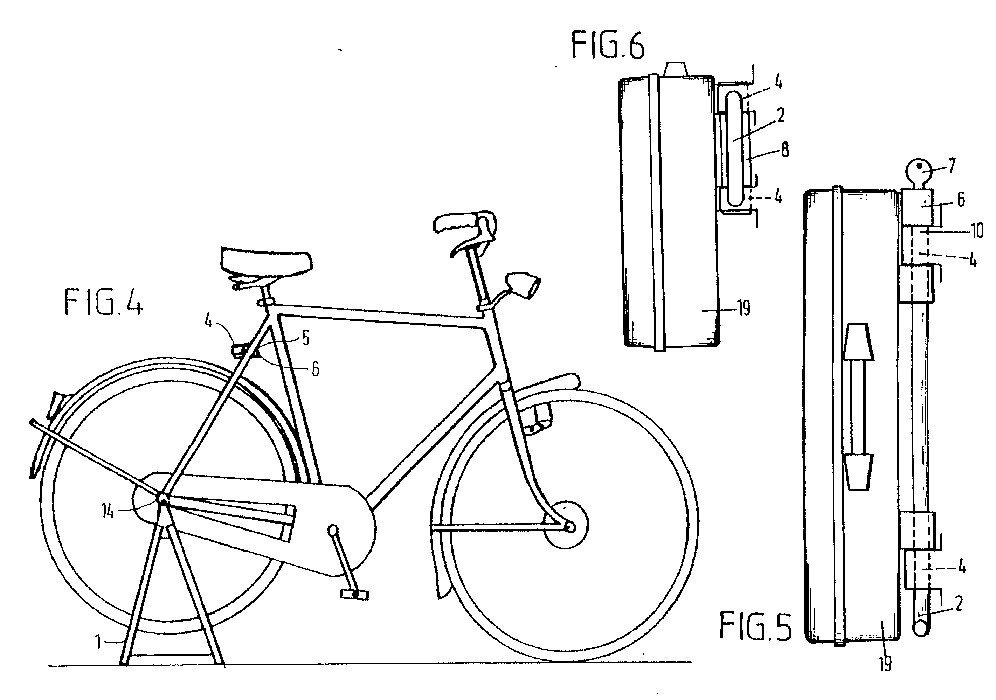

Figs. 3 and 4 show an alternative embodiment of the invention, wherein support structure 1 includes supporting brackets 16, each disposed on one side of the luggage carrier. At the top of the supporting brackets, there are provided four of the above clamping members 9, while spacing sleeves 18 are provided for securing the points of attachment 14, which sleeves ensure that the support structure 1 can rotate about points of attachment 14, even if, for example, bolts fitted through openings in points of attachment 14 have been tightened. By being swung down, support structure 1 can be used as a stand, as shown in Fig. 4.

Figs. 5 and 6 show an embodiment of the luggage carrier according to the invention, wherein the carrier bracket 2 is arranged to be installed aside a vehicle, as conventional especially with motorcycles. It is then possible to attach panniers or suitcases 19 to carrier bracket 2. These can be removed by opening lock 8 and sliding carrier bracket 2 out of attaching members 4. Carrier bracket 2 can then be used as a shackle lock for locking the vehicle.

Fig. 7 shows an embodiment wherein one of the supporting brackets 16 of the support structure 1 is constructed as a shackle lock, in which the lock 8 is provided near the point of attachment 14 of bracket 13. When the shackle lock is attached to the other parts of the luggage carrier, pin 3, in a manner analogous to that of the above discussed embodiments, is inserted through an opening in one end 11 of bracket 16 and through opening 12 in attaching member 4 and is brought with end 13 into engagement with lock 8. At the sides of bracket 16 opposite ends 10, 11, portions 19 thereof are formed in such a manner that, at the underside of carrier bracket 2, clamping members 9, which may be attached to the portions of support structure 1 extending therealong, can engage therewith. Thus, bracket 16 of support structure 1, constructed as a lock, can be attached to carrier bracket 2.

## Claims

1. A luggage carrier for a vehicle, in particular a two-wheeled or three-wheeled vehicle, which is provided with one or more bow-shaped parts, characterized in that a bow-shaped part (2 or 16) is constructed as a detachable shackle lock.

2. A luggage carrier as claimed in claim 1, comprising a carrier bracket, characterized in that said carrier bracket (2) forms the bow-shaped part constructed as a shackle lock.

3. A luggage carrier as claimed in claim 1, comprising at least one lateral supporting bracket, characterized in that one supporting bracket (16) is constructed as a detachable shackle lock.

4. A luggage carrier as claimed in claim 2, comprising a support structure, characterized in that at least a portion (16) of the support structure (1) is adapted to be attached to the vehicle for swivelling movement about points of attachment (14) near the end thereof remote from the carrier bracket.

5. A luggage carrier as claimed in any one of the preceding claims, characterized by comprising a closing member (3) adapted to connect opposite ends (10, 11) of the bow-shaped part (2 or 16), constructed as a shackle lock, with one another and with an attaching member (4) secured to the vehicle.

6. An attaching member as claimed in claim 5, characterized in that the closing member is a pin (3), which in the closed position, in which the bracket (2 or 16) constructed as a shackle lock, forms part of the luggage carrier, extends through an opening in either of the two ends (10) of the bracket and through an opening (12) in the attaching member (4) and is locked with one end (13) in a lock (8) provided at the other end (11) of the bracket (2 or 16) constructed as a shackle lock.

7. A bracket as claimed in any one of the preceding claims, characterized by clamps (9) for attaching the bow-shaped part (2 or 16) constructed as a detachable shackle lock.

## Ansprüche

1. Gepäckträger für Fahrzeuge, insbesondere für Fahrzeuge mit zwei oder drei Rädern, der einen oder mehrere bogenförmige Teile aufweist, dadurch **gekennzeichnet,**
daß ein bogenförmiges Teil (2 oder 16) als entfernbares Bügelschloß ausgestaltet ist.

2. Gepäckträger nach Anspruch 1 mit einem Trägerbügel, dadurch **gekennzeichnet,**
daß der Trägerbügel (2) das bogenförmige, als Bügelschloß ausgestaltete Teil bildet.

3. Gepäckträger nach Anspruch 1 mit mindestens einem seitlichen Stützbügel, dadurch **gekennzeichnet,**
daß ein Stützbügel (16) als entfernbares Bügelschloß ausgestaltet ist.

4. Gepäckträger nach Anspruch 2 mit einer Stützstruktur, dadurch **gekennzeichnet,**
daß mindestens ein Abschnitt (16) der Stützstruktur (1) an dem Fahrzeug derart befestigt ist, daß er um Befestigungspunkte (14) in der Nähe des Endes, das von dem Trägerbügel entfernt ist, eine Schwenkbewegung durchführen kann.

5. Gepäckträger nach einem der vorhergehenden Ansprüche, dadurch **gekennzeichnet,**
daß er ein Verschlußglied (3) besitzt, welches die beiden gegenüberliegenden Enden (10, 11) des als Bügelschloß ausgestalteten bogenförmigen Teils (2 oder 16) miteinander und mit einem Befestigungsglied (4) verbinden kann, welches an dem Fahrzeug befestigt ist.

6. Befestigungsglied nach Anspruch 5, dadurch **gekennzeichnet,**
daß das Verschlußglied ein Stift (3) ist, der in der geschlossenen Position, in der der als Bügelschloß ausgestaltete Bügel (2 oder 16) einen Teil des Gepäckträgers darstellt, durch eine Öffnung in einer der beiden Enden (10) des Bügels und durch eine Öffnung (12) in dem Befestigungsglied (4) hindurchragt und mit einem Ende (13) in einem an dem anderen Ende (11) des als Bügelschloß ausgestalteten Bügels (2 oder 16) verriegelt wird.

7. Bügel nach einem der vorhergehenden Ansprüche, **gekennzeichnet** durch
Klammern (9) zum Befestigen des als entfernbares Bügelschloß ausgestalteten bogenförmigen Teils (2 oder 16).

## Revendications

1. Un porte-bagage pour un véhicule, en particulier un véhicule à deux roues ou trois roues, qui est muni d'une ou plusieurs parties de forme recourbée, caractérisé en ce qu'une pièce (2 ou 16) de forme recourbée est construite sous forme de serrure à arceau amovible.

2. Un porte-bagage tel que revendiqué à la revendication 1, comprenant une console porteuse,
caractérisé en ce que ladite console porteuse (2) forme la pièce de forme recourbée construite sous forme d'une serrure à arceau.

3. Un porte-bagage tel que revendiqué à la revendication 1, comprenant au moins une console latérale de support,
caractérisé en ce qu'une console latérale (16) est construite sous forme d'une serrure à arceau amovible.

4. Un porte-bagage tel que revendiqué à la revendication 2, comprenant une structure de support,
caractérisé en ce qu'au moins une portion (16) de la structure de support (1) est agencée pour être fixée au véhicule à mouvement de pivotement autour de points de fixation (14) voisins de son extrémité opposée à la console porteuse.

5. Un porte-bagage tel que revendiqué dans l'une quelconque des revendications précédentes,
caractérisé en ce qu'il comprend un organe de fermeture (3) agencé pour relier les extrémités opposées (10, 11) de la pièce (2 ou 16) de forme recourbée, construite sous forme d'une serrure à arceau, l'une à l'autre à un organe de fixation (4) fixé au véhicule.

6. Un organe de fixation tel que revendiqué à la revendication 5,
caractérisé en ce que l'organe de fermeture est une broche (3) qui, en position de fermeture, dans laquelle la console (2 ou 16) construite sous forme de serrure à arceau forme une partie du porte-bagage, s'étend à travers une ouverture dans l'une quelconque des deux extrémités (10) de la console et à travers une ouverture (12) dans l'organe de fixation (4) et est verrouillée par une extrémité (13) dans une serrure (8) disposée à l'autre extrémité (11) de la console (2 ou 16) construite sous forme d'une serrure à arceau.

7. Une console telle que revendiquée dans l'une quelconque des revendications précédentes,
caractérisée par des serre-joints (9) pour fixer la pièce (2 ou 16) de forme recourbée construite sous forme d'une serrure à arceau amovible.

FIG.1

FIG.2

FIG.7

FIG.3

FIG.6

FIG.4

FIG.5

EP 0 337 552 B1